# NOUVEAU FASCICULE DE BREVET EUROPEEN

(11) **EP 3 390 209 B2**
(45) Date de publication et mention de la décision concernant l'opposition: **31.01.2024**
(45) Mention de la délivrance du brevet: 22.07.2020
(21) Numéro de dépôt: 16806264.4
(22) Date de dépôt: 08.11.2016
(51) Int. Cl.: B62D 35/02

(54) **DISPOSITIF DÉFLECTEUR AÉRODYNAMIQUE POUR ROUE DE VÉHICULE AUTOMOBILE**
AERODYNAMISCHE ABLENKVORRICHTUNG FÜR KRAFTFAHRZEUGRAD
AERODYNAMIC DEFLECTOR DEVICE FOR MOTOR VEHICLE WHEEL

(30) Priorité: 17.12.2015 FR 1562574
(43) Date de publication de la demande: 24.10.2018
(73) Titulaire: Valeo Systemes Thermiques, 78322 Le Mesnil Saint-Denis Cedex (FR)
(72) Inventeur: MITIDIERI, Enzo, 78260 Achères (FR); GERBER, Sylvain, 91320 Wissous (FR); DION, Nathalie, 78530 Buc (FR)
(74) Mandataire: Valeo Systèmes Thermiques
(86) Numéro de dépôt international: PCT/FR2016/052892
(87) Numéro de publication internationale: WO 2017/103357

(56) Documents cités:
- EP-A2- 2 607 215
- DE-A1- 2 333 853
- DE-A1-102011 053 350
- FR-A1- 2 858 793
- FR-A1- 2 897 038
- JP-A- 2006 069 396
- JP-A- 2008 013 013
- JP-A- 2008 279 819
- JP-U- S63 111 378

## Description

L'invention concerne un dispositif déflecteur aérodynamique pour roue de véhicule automobile.

Une préoccupation constante dans le domaine automobile est la consommation de carburant et l'impact écologique du véhicule notamment par ses émissions de gaz à effet de serre comme le CO2 ou par des gaz toxiques comme par exemple les Nox. Pour diminuer la consommation en carburant, les constructeurs automobiles tentent de rendre d'une part les moteurs de propulsion plus efficaces et d'autre part de diminuer la consommation des équipements du véhicule.

Un facteur important dans la consommation d'un véhicule est déterminé par la prise au vent ou l'aérodynamisme du véhicule.

En effet, l'aérodynamisme d'un véhicule automobile est une caractéristique importante car il influence notamment la consommation de carburant (et donc la pollution) ainsi que les performances notamment d'accélération dudit véhicule.

En particulier, la trainée ou la résistance aérodynamique à l'avancement joue un rôle déterminant, notamment à des vitesses plus élevées, car la trainée varie en fonction du carré de la vitesse de déplacement du véhicule.

Selon les modèles utilisés en mécanique des fluides, on peut par exemple quantifier la force de traînée qui s'exerce sur un véhicule automobile à l'aide d'une surface de référence S. En première approximation, la force de traînée, notée Fx, est égale à q*S*Cx, où q désigne la pression dynamique (q = ½ ρ*V², p désignant la masse volumique de l'air et V la vitesse du véhicule par rapport à l'air), Cx désignant un coefficient de traînée propre au véhicule.

La surface de référence utilisée pour un véhicule automobile correspond habituellement à sa surface frontale. On comprend donc que pour réduire la traînée, il faut viser à réduire la surface de référence.

L'analyse des phénomènes aérodynamiques plus en détail a permis de mettre à jour aussi le rôle déterminant des roues de véhicule.

En effet, les roues peuvent augmenter considérablement la résistance aérodynamique, car ils génèrent des turbulences lorsque le flux d'air frappe la roue en rotation. A des vitesses élevées, il a été démontré que les roues avant peuvent contribuer jusqu'à une valeur de 30% à la surface de référence.

En effet, lorsqu'un véhicule automobile se déplace, l'air dans lequel il évolue est dévié en fonction du profil du véhicule. L'air ainsi dévié atteint notamment le passage de roue. Le passage de roue est une cavité aménagée dans la carrosserie du véhicule, et entourant une roue (cela correspond à l'aile du véhicule). Le passage de roue remplit plusieurs fonctions. Il limite notamment (en les retenant) les projections d'eau, de boue ou d'autres matériaux sur lesquels la roue est susceptible de circuler et qu'elle peut être amenée à expulser lors de sa rotation. L'air atteignant le passage de roue circule notamment dans l'espace étroit séparant la roue du passage de roue. Il est connu qu'à cette occasion, des turbulences se forment autour des tours de roue et créent un frein aérodynamique.

Il est connu de placer un déflecteur fixe devant une roue de véhicule automobile, comme l'illustre le document JP S63 111378 U relatif à un déflecteur stationnaire positionné en amont de la roue avant du véhicule. Un tel déflecteur fixe, qui peut prendre la forme d'une bavette (souvent d'environ 5cm de hauteur), permet de réduire les turbulences dans le passage de roue.

Cependant, un tel déflecteur fixe risque d'être endommagé lors de franchissements d'obstacles (trottoir, ralentisseur de type dos d'âne, etc.).

Pour résoudre ce problème, on peut envisager un dispositif déflecteur équipé d'un actionneur. Un tel dispositif déflecteur est connu du document FR 2 858 793 A1, qui divulgue le préambule de la première revendication de la présente demande.

Cependant, il faut veiller à pouvoir optimiser le dimensionnement de l'actionneur aussi bien en encombrement qu'en consommation électrique.

La présente invention vise à pallier au moins partiellement certains des inconvénients décrits ci-dessus en proposant un dispositif déflecteur aérodynamique équipé d'un actionneur dont la taille et la puissance peuvent être limitées.

A cet effet, l'invention a pour objet un dispositif déflecteur aérodynamique pour roue de véhicule automobile, comprenant :
- un support configuré pour être monté sur un véhicule automobile,
- une paroi déflectrice montée mobile sur le support entre d'une part une position escamotée dans laquelle, à l'état monté, ladite paroi déflectrice est relevée par rapport au support, et d'autre part une position déployée dans laquelle, à l'état monté, ladite paroi déflectrice est abaissée par rapport au support et apte à être placée en amont de la roue du véhicule,
- un actionneur configuré pour déplacer ladite paroi déflectrice entre les positions escamotée et déployée.

Selon l'invention, la paroi déflectrice possède en coupe transversale une portion centrale, notamment destinée à être disposée à l'état monté du dispositif en amont de la roue, et deux parties latérales s'évasant depuis la partie centrale de manière à obtenir une forme divergente dans le sens du flux d'air frappant ladite paroi.

Du fait de la forme aérodynamique de la paroi déflectrice elle-même, l'actionneur peut ainsi posséder un encombrement, une puissance et une consommation réduits car les forces de déplacement de la paroi sont minimisées.

Le dispositif déflecteur aérodynamique selon l'invention peut comporter une ou plusieurs des caractéristiques décrites ci-dessous prises seules ou en combinaison.

Selon l'invention, en coupe transversale, les parties latérales de la paroi déflectrice sont incurvées.

Selon l'invention, les parties latérales de la paroi déflectrice sont incurvées de façon concave.

Selon un autre aspect de l'invention, la partie latérale de la paroi déflectrice destinée à être du côté du compartiment moteur possède une extension latérale plus importante que l'autre partie latérale de la paroi déflectrice.

Selon un autre aspect de l'invention, la partie centrale de la paroi déflectrice possède en coupe longitudinale une forme d'arc de cercle.

Selon un autre aspect de l'invention, la paroi déflectrice est reliée au support par l'intermédiaire d'un axe de pivotement et en ce que l'actionneur est couplé directement à cet axe de pivotement.

Selon un autre aspect de l'invention, la paroi déflectrice est reliée au support par l'intermédiaire de paliers de pivotement et l'actionneur comprend un levier de sortie présentant à son extrémité libre un pion coopérant avec un rail de déplacement de la paroi déflectrice.

Selon un autre aspect de l'invention, le rail de déplacement présente un trou oblong dans lequel pénètre le pion porté par le levier de sortie.

Selon un autre aspect de l'invention, le dispositif décrit ci-dessus comporte en outre une paroi de fermeture reliant les deux parois latérales et opposée à la partie centrale.

Selon un autre aspect de l'invention, le rail de déplacement est porté par la paroi de fermeture.

Selon un autre aspect de l'invention, le trou oblong s'étend parallèlement à la paroi de fermeture et en ce que dans la position déployée, le levier de sortie est orienté perpendiculairement par rapport à la paroi de fermeture.

L'invention concerne également un véhicule automobile qui comprend au moins un dispositif déflecteur aérodynamique tel que décrit précédemment disposé en amont d'une roue de véhicule.

D'autres avantages et caractéristiques apparaîtront à la lecture de la description de l'invention, ainsi que des dessins annexés sur lesquels :
- les figures 1A, 1B montrent des schémas de côté du dispositif déflecteur aérodynamique selon un mode de réalisation non couvert par l'invention dans deux positions différentes,
- la figure 1C montre un schéma simplifié en vue de dessus du dispositif de la figure 1B,
- les figures 2A et 2B montrent des schémas en perspective de côté du dispositif déflecteur aérodynamique selon un deuxième mode de réalisation dans deux positions différentes,
- la figure 2C montre un schéma en perspective selon une vue frontale du dispositif de la figure 2B,
- la figure 2D montre une vue en coupe transversale de la paroi déflectrice du dispositif de la figure 2B,
- les figures 3A et 3B montrent des schémas en perspective de côté du dispositif déflecteur aérodynamique selon un troisième mode de réalisation dans deux positions différentes, et
- la figure 3C montre un schéma en perspective selon une vue en coupe longitudinale du dispositif de la figure 3B.

Dans la description, des éléments identiques sont identifiés par les mêmes numéros de référence.

Dans la présente description, on entend par « en amont » qu'un élément est placé avant un autre par rapport au sens de circulation du flux d'air. A contrario, on entend par « en aval » qu'un élément est placé après un autre par rapport au sens de circulation du flux d'air. Par supérieur, inférieur, haut et bas, on se réfère à la disposition des éléments sur les figures, ce qui correspond généralement à la disposition des éléments à l'état monté dans un véhicule automobile.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Un repère par exemple LH, LT, LH ou LTH sur une figure indique respectivement les directions longitudinale (L), transversale (T) et en hauteur (H) correspondant à des directions x-y-z du véhicule.

Dans la description, on peut indexer certains éléments ou paramètres, comme par exemple premier élément ou second élément ainsi que premier paramètre et second paramètre ou encore premier critère et second critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps.

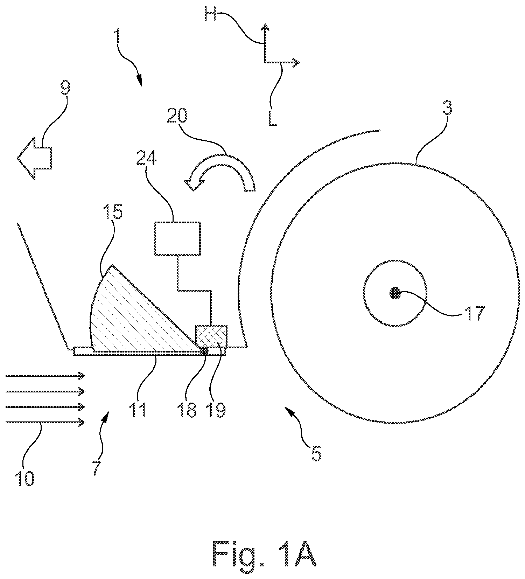

La figure 1A montre un schéma simplifié de côté d'une partie avant 1 d'un véhicule automobile, en particulier une roue 3 et un passage de roue 5 muni d'un dispositif déflecteur aérodynamique 7 de roue.

Sur le schéma de la figure 1A, le véhicule se déplace selon la flèche 9, de sorte qu'un flux d'air 10 impacte le véhicule et notamment la roue 3 en sens inverse.

Le dispositif déflecteur aérodynamique 7 comprend un support 11 configuré pour être par exemple fixé au châssis du véhicule en amont de la roue 3, et notamment au niveau du passage de roue 5.

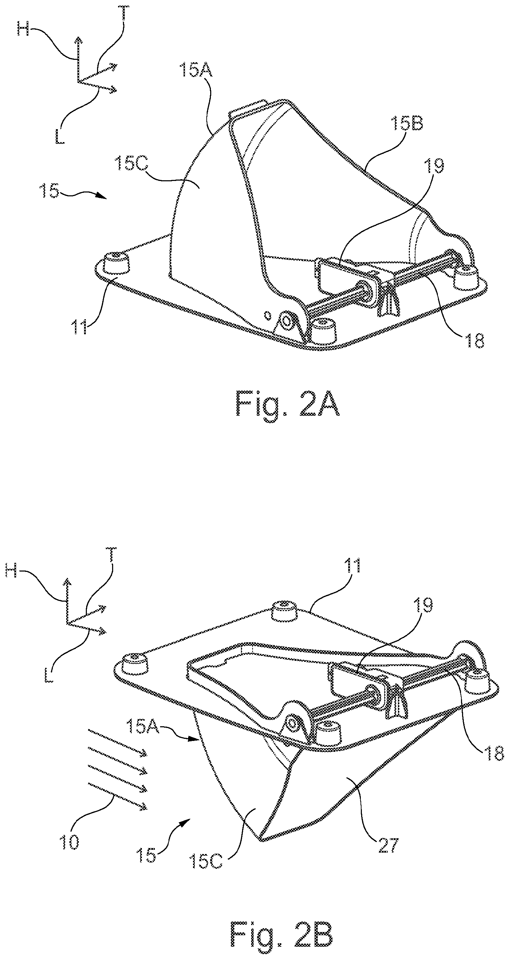

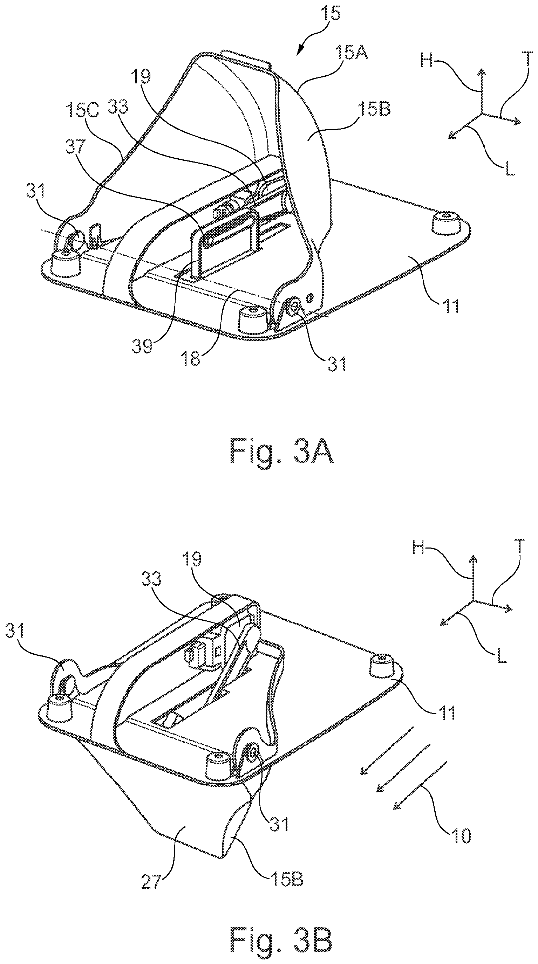

Comme cela sera mieux visible sur les figures 2A à 2C ou 3A à 3C, dans le présent mode de réalisation, le support 11 est réalisé par exemple en tant que cadre ou plaque configuré pour être fixé au véhicule, par exemple par vissage ou par des agrafes ou tout autre moyen de fixation.

Le dispositif déflecteur aérodynamique 7 comprend de plus une paroi déflectrice 15. Dans le cas où le support 11 est réalisé comme une plaque quasiment pleine, on prévoit de ménager une ouverture dans la plaque ayant un contour de façon à permettre à la paroi déflectrice 15 de passer au travers de cette ouverture.

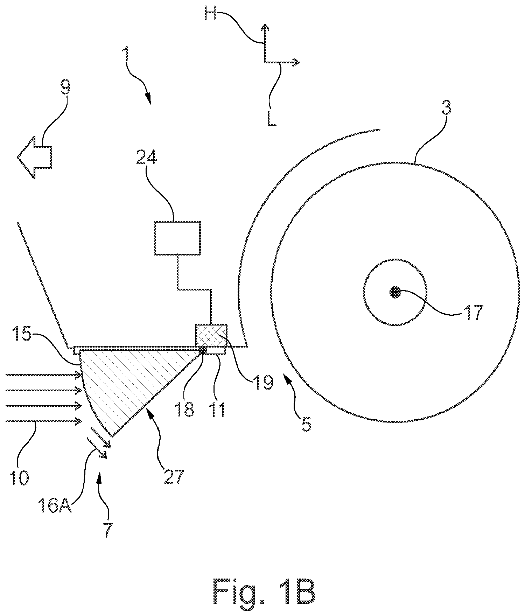

Comme on le voit sur les figures 1A, 1B, cette paroi déflectrice 15 possède en coupe longitudinale, c'est-à-dire dans le sens de la longueur de la paroi déflectrice 15, ici selon la direction « L », une forme générale en arc de cercle.

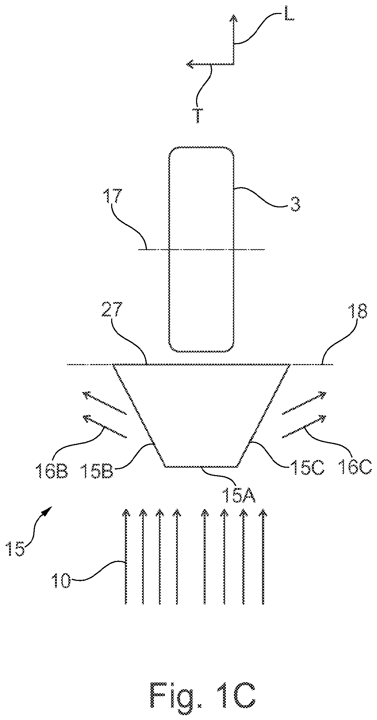

Comme on le voit sur la figure 1C, la paroi déflectrice 15 possède en coupe transversale selon la direction « T » une portion centrale 15A destinée à être disposée à l'état monté du dispositif 1 en amont de la roue 3 et deux parties latérales 15B et 15C s'évasant depuis la partie centrale de manière à obtenir une forme divergente dans le sens du flux d'air 10 frappant ladite paroi 15.

Dans le présent mode de réalisation non couvert par l'invention, la paroi déflectrice 15 possède en coupe transversale, selon la direction « T », une forme de trapèze notamment isocèle, c'est-à-dire que la longueur de la partie latérale 15B qui se trouve du côté du compartiment moteur est la même que celle de la partie latérale 15C qui se trouve du côté extérieur du véhicule.

Ces parties latérales 15B et 15C ont pour fonction de dévier latéralement le flux d'air 10 frappant la paroi déflectrice 15 comme indiqué par les flèches 16B et 16C alors que la partie centrale 15A dirige le flux d'air vers le sol (voir flèches 16A de la figure 1B).

Les extrémités libres des parties latérales 15B et 15C sont articulées autour d'un axe de pivotement 18, de sorte que la paroi déflectrice 15 est montée mobile sur le support 11 entre d'une part une position escamotée (figure 1A) dans laquelle, à l'état monté, ladite paroi déflectrice 15 est relevée, et d'autre part une position déployée (figure 1B) dans laquelle, à l'état monté, ladite paroi déflectrice 15 est abaissée et placée en amont de la roue 3 du véhicule. L'axe de pivotement 18 est à l'état monté du dispositif déflecteur aérodynamique sensiblement parallèle à l'axe transversal « T » du véhicule.

Dans la position escamotée, la paroi déflectrice 15 est relevée dans un logement situé en amont du passage de roue 5 et ne fait donc aucun obstacle au flux d'air 10 impactant la roue 5.

Cette position escamotée est généralement adoptée pour des vitesses peu élevées, par exemple inférieures à 50km/h.

En effet, pour de petites vitesses, l'effet de la paroi déflectrice 15 est peu important, notamment par rapport à la surface de référence.

De plus, c'est à ces vitesses inférieures à environ 50km/h que l'on franchit des obstacles comme par exemple des trottoirs, des ralentisseurs de type dos d'âne, coussin berlinois, etc. En prenant la position escamotée à ces vitesses faibles, la paroi déflectrice 15 est protégée contre la casse.

Dans la position abaissée ou déployée montrée à la figure 1B, la paroi déflectrice 15 est placée en amont de la roue 3 du véhicule en étant au moins partiellement en dessous de l'axe de rotation 17 de ladite roue 3.

C'est dans cette position abaissée ou active, que le flux d'air 11 est dévié de manière à ne pas pouvoir s'engouffrer dans le passage de roue 5.

Plus précisément, il est dévié vers le bas en direction du sol en ce qui concerne la partie centrale 15A (voir flèche 16A de la figure 1B) et latéralement en direction du compartiment moteur en ce qui concerne la paroi 15B (voir flèches 16B de la figure 1C) et vers l'extérieur en ce qui concerne la paroi 15C (voir flèches 16C de la figure 1C).

En particulier le flux d'air 16B est avantageux, car il peut contribuer au refroidissement du compartiment moteur.

On évite ainsi la création des turbulences dans le passage de roue 5 qui contribuent à l'augmentation significative de la surface de référence.

De plus, la paroi déflectrice 15 elle-même est plus aérodynamique. D'une part, ceci est avantageux car cela réduit la force nécessaire à son déplacement entre les positions escamotée et déployée.

Ainsi, la force de trainée dans son ensemble peut être contenue à des valeurs plus acceptables.

D'autre part, cela permet aussi de prévoir une paroi déflectrice 15 plus mince car les forces s'exerçant sur cette paroi déflectrice 15 sont plus faibles.

Pour éviter par exemple que de la boue ne puisse s'accumuler à l'intérieur du volume défini par la paroi déflectrice 15, on prévoit de plus une paroi de fermeture 27 reliant les bords inférieurs des parties centrale 15A et latérales 15B et 15C.

Pour pouvoir opérer le déplacement entre la position escamotée (figure 1A) et la position déployée (figure 1B), le dispositif déflecteur aérodynamique comprend un actionneur 19 qui est couplé directement à l'axe de pivotement 18 pour faire tourner (voir flèche 20 de la figure 1A) la paroi déflectrice 15 depuis sa position escamotée vers la position déployée.

Du fait de la forme aérodynamique de la paroi déflectrice 15 elle-même, cet actionneur 19 peut posséder un encombrement, une puissance et une consommation plus faibles car les forces de déplacement de la paroi 15 sont peu élevées.

L'actionneur 19 est par exemple un moteur électrique avec un organe de sortie rotatif en prise directement ou indirectement avec l'axe de rotation 17.

L'actionneur 19 est par exemple relié à une unité de commande 24 comprenant par exemple un circuit électronique tel qu'un microprocesseur ou un microcontrôleur recevant une information de vitesse depuis un capteur de vitesse, et ordonnant le déploiement ou la rétractation de la paroi déflectrice 15 en conséquence.

Selon une mise en œuvre possible, un mécanisme d'hystérésis est prévu afin d'éviter les effets de seuil. Ainsi, il est possible de prévoir que l'unité de commande 24 déclenche le déploiement de la paroi déflectrice 15 dès que la vitesse dépasse un seuil donné (par exemple 50km/h), mais que la rétractation du déflecteur n'est déclenchée que lorsque la vitesse redescend en dessous d'un seuil inférieur au seuil précité (par exemple un seuil de 40km/h).

Ainsi, le circuit évite de déclencher de façon intempestive des alternances de déploiement et de rétractation lorsque le véhicule circule à une vitesse proche du seuil initial et passe en permanence d'un côté et de l'autre de ce seuil.

Le seuil de déclenchement du déploiement (par exemple 50km/h) est choisi de façon à être suffisamment élevé pour que le déploiement ait un effet perceptible sur la traînée aérodynamique. La traînée varie avec le carré de la vitesse. Pour les vitesses faibles, la traînée est elle-même très faible. Déployer le déflecteur n'est alors pas utile.

Le seuil de déclenchement de la rétractation (par exemple 40 km/h) est choisi de façon à être suffisamment élevé pour que le conducteur puisse raisonnablement envisager le franchissement d'obstacles (trottoirs, dos d'âne, etc.) à la vitesse considérée. Ainsi, on évite que le véhicule automobile soit amené à franchir un tel obstacle (de nature à endommager le déflecteur) alors que le déflecteur est déployé.

Selon encore une autre variante, l'unité de commande 24 reçoit aussi des données de géolocalisation associées avec des informations sur la situation de conduite.

Ainsi par exemple, l'unité de commande 24 peut être configurée pour inhiber tout déploiement de la paroi déflectrice 15 en agglomération où la vitesse est limitée. En effet, c'est en agglomération qu'il y a le plus de risque de devoir franchir des obstacles pouvant endommager la paroi déflectrice 15.

On comprend donc que le dispositif déflecteur aérodynamique 7 selon l'invention permet d'améliorer la trainée aérodynamique du véhicule et donc en particulier la consommation en carburant du véhicule tout en permettant par son caractère commandé ou actif le franchissement d'obstacles à vitesse basse en toute sécurité.

Les figures 2A à 2D montrent un dispositif déflecteur aérodynamique selon un mode de réalisation conforme à l'invention.

Les figures 2A et 2B montrent des schémas en perspective de côté du dispositif déflecteur aérodynamique respectivement dans la position escamotée et dans la position déployée.

Ce mode de réalisation conforme à l'invention se distingue de celui des figures 1A à 1C par une forme différente des parties latérales 15B et 15C de la paroi déflectrice 15.

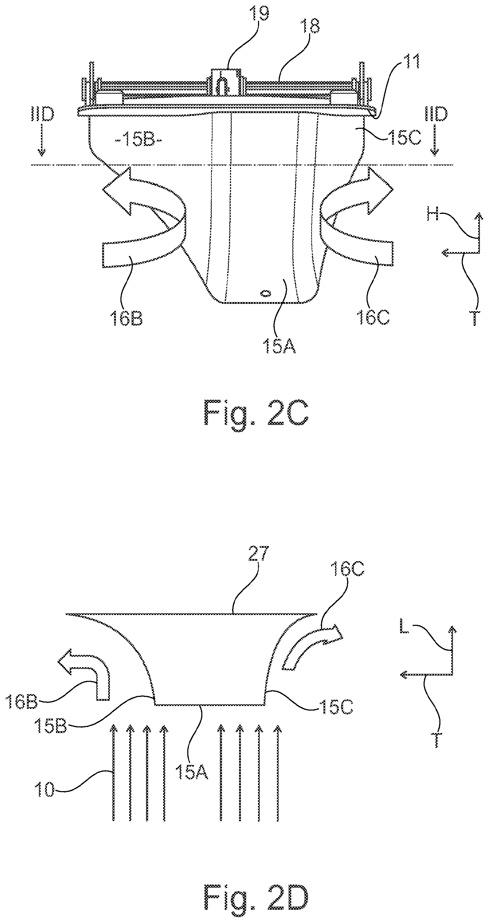

Comme cela est le plus visible sur les figures 2C et 2D montrant respectivement d'une part une vue de face en perspective du dispositif déflecteur aérodynamique dans la position déployée et d'autre part une vue en coupe transversale de la paroi déflectrice 15 selon la ligne IID-IID de la figure 2C, c'est-à-dire selon une vue en coupe parallèle à un plan horizontal « L-T » du véhicule, les parties latérales 15B et 15C de la paroi déflectrice 15 sont incurvées en coupe transversale, plus spécifiquement selon l'invention de façon concave.

Cette forme arrondie permet de mieux guider le flux d'air 10 dans une direction qui sensiblement parallèle à l'axe transversale « T » du véhicule, notamment pour le flux d'air dévié 16B. On peut ainsi dévier le flux d'air 10 d'environ 90° vers le compartiment moteur du véhicule.

Afin que la contribution au refroidissement du compartiment moteur puisse encore être optimisée, la partie latérale 15B de la paroi déflectrice 15 destinée à être du côté du compartiment moteur possède une extension latérale plus importante que l'extension de l'autre partie latérale 15C de la paroi déflectrice 15.

Nous pouvons voir sur les figures 2A, 2B et 2C, que l'axe de pivotement 18 comprend une tige, ou un ensemble de tiges qui définissent l'axe de pivotement, avec l'actionneur 19 étant couplé directement à l'axe de pivotement 18, et à la tige, pour faire tourner la paroi déflectrice 15 depuis sa position escamotée (fig. 2A) vers la position déployée (fig. 2B).

Les figures 3A à 3C montrent un troisième mode de réalisation du dispositif déflecteur aérodynamique 7.

Ce mode de réalisation se distingue de celui de des figures 2A à 2D par le mécanisme d'entraînement de la paroi déflectrice 15.

La paroi déflectrice 15 est reliée au support 11 en forme de plaque par l'intermédiaire de paliers de pivotement 31 qui définissent l'axe de pivotement 18 de la paroi déflectrice 15.

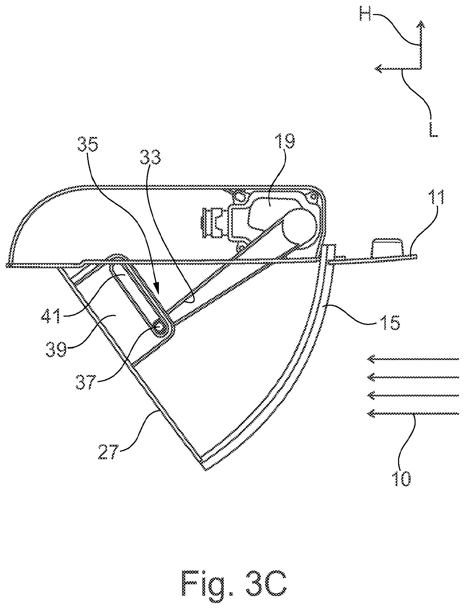

Comme on le voit distinctement sur la figure 3C, l'actionneur 19 est positionné près de la paroi déflectrice 15 et comprend un levier de sortie 33 orienté vers l'arrière et présentant à son extrémité libre 35 un pion 37 coopérant avec un rail de déplacement 39 de la paroi déflectrice 15. L'actionneur 19 est donc couplé indirectement à l'axe de pivotement 18.

Le rail de déplacement 39 est porté par la paroi de fermeture 27 et présente un trou oblong 41 dans lequel pénètre le pion 37 porté par le levier de sortie 33.

Le trou oblong 41 s'étend parallèlement à la paroi de fermeture 27.

Ceci a pour avantage que le levier de sortie 33 avec son pion 37 peut bénéficier d'un effet de levier croissant au fur et à mesure que le pion 37 avance dans le trou oblong 41. En effet, la position d'appui du pion 37 dans le trou oblong 41 s'éloigne de l'axe de pivotement 18 lors du déplacement de la paroi déflectrice depuis sa position escamotée vers la position déployée.

Dans la position déployée (figures 3B et 3C), le levier de sortie 33 est orienté perpendiculairement par rapport à la paroi de fermeture 27.

Cela permet en quelque sorte de verrouiller la position déployée et de délester l'actionneur 19, de sorte qu'aucune force ne doit être exercée par l'actionneur 19 pour maintenir la paroi déflectrice 15 en position déployée.

On comprend que le dispositif déflecteur aérodynamique se distingue par sa simplicité, son efficacité et sa facilité de mise en œuvre.

## Revendications

1. Dispositif déflecteur aérodynamique (7) pour roue de véhicule automobile, comprenant :
- un support (11 ) configuré pour être monté sur un véhicule automobile,
- une paroi déflectrice (15) montée mobile sur le support (11 ) entre d'une part une position escamotée dans laquelle, à l'état monté, ladite paroi déflectrice (15) est relevée par rapport au support (11), et d'autre part une position déployée dans laquelle, à l'état monté, ladite paroi déflectrice (15) est abaissée par rapport au support (11) et apte à être placée en amont de la roue (3) du véhicule,
- un actionneur (19) configuré pour déplacer ladite paroi déflectrice (15) entre les positions escamotée et déployée,
**caractérisé en ce que** la paroi déflectrice (15) possède en coupe transversale une portion centrale (15A) et deux parties latérales (15B, 15C) s'évasant depuis la partie centrale (15A) de manière à obtenir une forme divergente dans le sens du flux d'air (10) frappant ladite paroi (15), et **en ce qu'**en coupe transversale, les parties latérales (15B, 15C) de la paroi déflectrice (15) sont incurvées et les parties latérales (15B, 15C) de la paroi déflectrice (15) sont incurvées de façon concave.

2. Dispositif selon la revendication 1, **caractérisé en ce que** la partie latérale (15B) de la paroi déflectrice (15) destinée à être du côté du compartiment moteur possède une extension latérale plus importante que l'autre partie latérale (15C) de la paroi déflectrice (15).

3. Dispositif selon l'une quelconque des revendications 1 à 2, **caractérisé en ce que** la partie centrale (15A) de la paroi déflectrice (15) possède en coupe longitudinale une forme d'arc de cercle.

4. Dispositif selon l'une quelconque des revendications 1 à 3, **caractérisé en ce que** la paroi déflectrice (15) est reliée au support (11) par l'intermédiaire d'un axe de pivotement (18) et **en ce que** l'actionneur (19) est couplé directement à cet axe de pivotement (18) .

5. Dispositif selon l'une quelconque des revendications 1 à 3, **caractérisé en ce que** la paroi déflectrice est reliée au support (11 ) par l'intermédiaire de paliers de pivotement (31 ) et l'actionneur (19) comprend un levier de sortie (33) présentant à son extrémité libre (35) un pion (37) coopérant avec un rail de déplacement (39) de la paroi déflectrice (15).

6. Dispositif selon la revendication 5, **caractérisé en ce que** le rail de déplacement (39) présente un trou oblong (41 ) dans lequel pénètre le pion (37) porté par le levier de sortie (33).

7. Dispositif selon l'une quelconque des revendications 1 à 6, **caractérisé en ce qu'**il comporte en outre une paroi de fermeture (27) reliant les deux parois latérales (15B, 15C) et opposée à la partie centrale (15A).

8. Dispositif selon la revendication 5 ou 6 prises ensemble avec la revendication 7, **caractérisé en ce que** le rail de déplacement (39) est porté par la paroi de fermeture (27).

9. Dispositif selon la revendication 8, **caractérisé en ce que** le trou oblong (41) s'étend parallèlement à la paroi de fermeture (27) et **en ce que** dans la position déployée, le levier de sortie (33) est orienté perpendiculairement par rapport à la paroi de fermeture (27).

10. Véhicule automobile, **caractérisé en ce qu'**il comprend au moins un dispositif déflecteur aérodynamique (7) selon l'une quelconque des revendications 1 à 9 disposé en amont d'une roue (3) de véhicule.

## Patentansprüche

1. Aerodynamische Ableitvorrichtung (7) für ein Kraftfahrzeugrad, umfassend:
- einen Träger (11), der dazu ausgebildet ist, an einem Kraftfahrzeug befestigt zu sein,
- eine Ableitwand (15), die auf dem Träger (11) zwischen einerseits einer eingefahrenen Position, in welcher im befestigten Zustand die Ableitwand (15) bezogen auf den Träger (11) erhöht ist, und andererseits einer ausgefahrenen Position, in welcher im befestigten Zustand die Ableitwand (15) bezogen auf den Träger (11) abgesenkt ist und geeignet ist, stromauf des Rads (3) des Fahrzeugs platziert zu sein, beweglich gelagert ist,
- einen Aktor (19), der dazu ausgebildet ist, die Ableitwand (15) zwischen der eingefahrenen und der ausgefahrenen Position zu bewegen,
**dadurch gekennzeichnet, dass** die Ableitwand (15) im Querschnitt einen mittleren Abschnitt (15A) und zwei seitliche Abschnitte (15B, 15C), die sich von dem mittleren Abschnitt (15A) weiten, aufweist, um eine Form zu erhalten, die in der Richtung des Luftstroms (10), der auf die Wand (15) trifft, auseinanderläuft und dass die seitlichen Bereiche (15B, 15C) der Ableitwand (15) im Querschnitt gekrümmt sind und die seitlichen Bereiche (15B, 15C) der Ableitwand (15) konkav gekrümmt sind.

2. Vorrichtung nach Anspruch 1, **dadurch gekennzeichnet, dass** der seitliche Abschnitt (15B) der Ableitwand (15), der dazu bestimmt ist, sich auf der Seite des Motorraums zu befinden, eine größere seitliche Erstreckung als der andere seitliche Abschnitt (15C) der Ableitwand (15) aufweist.

3. Vorrichtung nach einem der Ansprüche 1 bis 2, **dadurch gekennzeichnet, dass** der mittlere Abschnitt (15A) der Ableitwand (15) im Längsschnitt eine Kreisbogenform aufweist.

4. Vorrichtung nach einem der Ansprüche 1 bis 3, **dadurch gekennzeichnet, dass** die Ableitwand (15) mittels einer Schwenkachse (18) mit dem Träger (11) verbunden ist, und dadurch, dass der Aktor (19) direkt mit dieser Schwenkachse (18) gekoppelt ist.

5. Vorrichtung nach einem der Ansprüche 1 bis 3, **dadurch gekennzeichnet, dass** die Ableitwand mittels Schwenklagern (31) mit dem Träger (11) verbunden ist und der Aktor (19) einen Ausfahrhebel (33) umfasst, der an seinem freien Ende (35) einen Stift (37) aufweist, der mit einer Bewegungsschiene (39) der Ableitwand (15) zusammenwirkt.

6. Vorrichtung nach Anspruch 5, **dadurch gekennzeichnet, dass** die Bewegungsschiene (39) ein Langloch (41) aufweist, in welches der Stift (37) eindringt, der von dem Ausfahrhebel (33) getragen wird.

7. Vorrichtung nach einem der Ansprüche 1 bis 6, **dadurch gekennzeichnet, dass** sie ferner eine Schließwand (27) aufweist, die die zwei Seitenwände (15B, 15C) verbindet und dem mittleren Abschnitt (15A) gegenüberliegt.

8. Vorrichtung nach Anspruch 5 oder 6 zusammengenommen mit Anspruch 7, **dadurch gekennzeichnet, dass** die Bewegungsschiene (39) von der Schließwand (27) getragen wird.

9. Vorrichtung nach Anspruch 8, **dadurch gekennzeichnet, dass** sich das Langloch (41) parallel zur Schließwand (27) erstreckt, und dadurch, dass in der ausgefahrenen Position der Ausfahrhebel (33) senkrecht zur Schließwand (27) ausgerichtet ist.

10. Kraftfahrzeug, **dadurch gekennzeichnet, dass** es mindestens eine aerodynamische Vorrichtung (7) nach einem der Ansprüche 1 bis 9 umfasst, die stromauf eines Fahrzeugrads (3) angeordnet ist.

## Claims

1. Aerodynamic deflector device (7) for a motor vehicle wheel, comprising:
- a support (11) configured to be mounted on a motor vehicle,
- a deflecting wall (15) mounted so as to be movable on the support (11) between, on the one hand, a retracted position in which, in the mounted state, said deflecting wall (15) is raised with respect to the support (11), and, on the other hand, a deployed position in which, in the mounted state, said deflecting wall (15) is lowered with respect to the support (11) and able to be placed upstream of the wheel (3) of the vehicle,
- an actuator (19) configured to move said deflecting wall (15) between the retracted and deployed positions,
**characterized in that** the deflecting wall (15) has, in cross section, a central portion (15A) and two lateral parts (15B, 15C) flaring from the central part (15A) so as to obtain a divergent shape in the direction of the air flow (10) striking said wall (15), and **in that**, in cross section, the lateral parts (15B, 15C) of the deflecting wall (15) are curved and the lateral parts (15B, 15C) of the deflecting wall (15) are curved in a concave manner.

2. Device according to Claim 1, **characterized in that** the lateral part (15B) of the deflecting wall (15) intended to be on the engine compartment side has a greater lateral extension than the other lateral part (15C) of the deflecting wall (15).

3. Device according to either one of Claims 1 and 2, **characterized in that** the central part (15A) of the deflecting wall (15) has, in longitudinal section, a circular arc shape.

4. Device according to any one of Claims 1 to 3, **characterized in that** the deflecting wall (15) is connected to the support (11) via a pivot axle (18), and **in that** the actuator (19) is coupled directly to this pivot axle (18).

5. Device according to any one of Claims 1 to 3, **characterized in that** the deflecting wall is connected to the support (11) via pivot bearings (31), and the actuator (19) comprises an output lever (33) having at its free end (35) a pin (37) cooperating with a movement rail (39) for moving the deflecting wall (15).

6. Device according to Claim 5, **characterized in that** the movement rail (39) has an oblong hole (41) into which the pin (37) borne by the output lever (33) penetrates.

7. Device according to any one of Claims 1 to 6, **characterized in that** it additionally comprises a closure wall (27) connecting the two lateral walls (15B, 15C) that is opposite to the central part (15A).

8. Device according to Claim 5 or 6 taken together with Claim 7, **characterized in that** the movement rail (39) is borne by the closure wall (27).

9. Device according to Claim 8, **characterized in that** the oblong hole (41) extends parallel to the closure wall (27), and **in that**, in the deployed position, the output lever (33) is oriented perpendicularly with respect to the closure wall (27).

10. Motor vehicle, **characterized in that** it comprises at least one aerodynamic deflector device (7) according to any one of Claims 1 to 9 arranged upstream of a vehicle wheel (3).
